# EUROPÄISCHE PATENTSCHRIFT

(11) **EP 1 092 480 B1**
(45) Veröffentlichungstag und Bekanntmachung des Hinweises auf die Patenterteilung: **06.10.2004**
(21) Anmeldenummer: 00114545.7
(22) Anmeldetag: 06.07.2000
(51) Int. Cl.: B05D 7/14, F16J 15/06, B05D 7/00

(54) **Verfahren zur Herstellung Zylinderkopfdichtungsvorprodukten**
Process for making cylinder head gasket pre-products
Procédé pour fabriquer des ébauches de joints de culasse

(30) Priorität: 13.10.1999 DE 19949397
(43) Veröffentlichungstag der Anmeldung: 18.04.2001
(73) Patentinhaber: Federal-Mogul Sealing Systems GmbH, 57562 Herdorf (DE)
(72) Erfinder: Schmitt, Klaus, 57520 Grünebach (DE)
(74) Vertreter: Becker Kurig Straus

(56) Entgegenhaltungen:
- EP-A- 0 704 646
- EP-A- 0 757 195
- EP-A- 0 816 723
- US-A- 3 660 184
- US-A- 3 661 401
- US-A- 5 938 208

## Beschreibung

Die vorliegende Erfindung betrifft ein Verfahren zur kontinuierlichen Beschichtung von Zylinderkopfdichtungsvorprodukten. Ein Stahlband erhält eine Abdichtbeschichtung, wobei anschließend aus einem Teil des derartig beschichteten Stahlbandes Zylinderkopfdichtungsvorprodukte werden.

Aus dem Stand der Technik ist es bekannt, daß aus Stahlblechen Zylinderkopfdichtungsvorprodukte ausgestanzt werden. Beispielsweise ist aus der U.S. 4,826,708 ein Verfahren bekannt, bei dem ein Stahlblech den folgenden Schritten unterworfen wird: Beschichten mit einer Abdichtbeschichtung, Trocknen, gegebenfalls nochmals partiell Beschichten und anschließend Ausstanzen eines Teiles aus dem Stahlband und Zusammensetzen von mehreren Teilen zu einer Zylinderkopfdichtung, die stahllaminiert ist. Das Stahlblech kann Beschichtungen aufweisen, die beispielsweise durch Siebdruck-, Elektronikdruckoder Transferdruckverfahren aufgebracht werden. Die Dicke einer Beschichtung beträgt dabei üblicherweise zwischen 5 und 200 Mikrometer, wobei die Beschichtung in einer Größe auf das Stahlblech aufgebracht wird, die etwas größer ist als die Größe des später auszustanzenden Teiles.

Aufgabe der vorliegenden Erfindung ist es nun, ein Verfahren zur Herstellung eines Zylinderkopfdichtungsvorproduktes zu schaffen, mit dem eine genaue Beschichtung erzielbar ist unter Wahrung größtmöglicher Flexibilität bezüglich des Materials der Beschichtung.

Diese Aufgabe wird gelöst mit einem Verfahren zur kontinuierlichen Beschichtung von Zylinderkopfdichtungsvorprodukten mit den Merkmalen des Anspruches 1 sowie mit einer Vorrichtung mit den Merkmalen des Anspruches 12, wobei weitere vorteilhafte Ausgestaltungen in den Unteransprüchen angegeben sind.

Ein Verfahren zur kontinuierlichen Beschichtung von Zylinderkopfdichtungsvorprodukten sieht vor, daß ein Stahlband eine Abdichtbeschichtung erhält und anschließend aus einem Teil des derartig beschichteten Stahlbandes Zylinderkopfdichtungsvorprodukte werden. Das Verfahren weist weiterhin die folgenden Schritte auf:
- vor dem Aufbringen einer ersten Abdichtbeschichtung wird ein Primer oder ein Haftgrund in zumindest einem vorbestimmbaren, nur partiellen Bereich des Stahlbandes aufgetragen, der im wesentlichen mit einem späteren Zylinderkopfdichtungsvorprodukt übereinstimmt,
- auf den vorbestimmbaren Bereich wird als erste Abdichtbeschichtung ein Pulver aufgebracht,
- das Stahlband wird durch einen Durchlaufofen geführt, so daß das Pulver eine feste Abdichtbeschichtung auf und mit dem Stahlband bildet und
- aus dem Stahlband wird das Zylinderkopfdichtungsvorprodukt mit zumindest dem überwiegenden Teil der Abdichtbeschichtung herausgelöst.

Der mit einer Abdichtschicht aus Pulver zu bestreuende Bereich des Stahlbleches wird vor dem Auftragen des Primers oder des Haftgrundes vorgeprägt. Dieses kann eine Erhebung oder Absenkung dieses Bereiches mittels einer Presseinrichtung sein oder durch entsprechende Vorstanzung erfolgen. Zum einen bildet die Vorprägung eine Grenze für den aufgetragen Primer, so daß er nicht verläuft, wenn es sich um eine flüssige Benetzung handelt. Zum anderen erlaubt dieses auch, daß nur die zu behandelnde Fläche des Stahlbandes Primer, Pulver und gegebenenfalls anderem ausgesetzt zu werden braucht. Gemäß einer Weiterbildung des Verfahrens wird beispielsweise vorgesehen, daß zumindest das Pulver einer Vibration zur Verteilung des Pulvers ausgesetzt wird. Auf diese Weise läßt sich zum einen eine besonderes glatte Oberfläche wie aber auch eine besonders dichte Verteilung des Pulvers erzielen. Insbesondere werden Vibrationen dann eingesetzt, wenn unterschiedliche Pulver verwendet werden, die jedoch eine besonders gute Verbindungszone benötigen. Die Vibrationen können beispielsweise über Kontakt mit einer Schwingungseinrichtung erzeugt werden, die die Schwingungen über den Kontakt mit dem Stahlband überträgt. Auch besteht die Möglichkeit einer kontaklosen Erzeugung von Vibrationen, beispielsweise durch Anregung des Pulvers mittels Schallschwingungen oder ähnlichem.

Die Verwendung des Abdichtmaterials in Form von Pulver zur Erzeugung der Abdichtbeschichtung ermöglicht es, daß zum einen sehr fein dosiert, zum anderen aber auch in erforderlicher Dicke eine Beschichtung aufgebaut werden kann. Insbesondere hat die Verwendung einer Pulverbeschichtung den Vorteil, daß verschiedene Materialien miteinander vermischt als Pulvermischung aufgebracht werden können. Auf diese Weise gestattet das Verfahren, die Beschichtung sehr gezielt bezüglich der Eigenschaften der Abdichtbeschichtung auswählen und lokal auftragen zu können. Je nach Art des Auftragens können so unterschiedliche Bereiche der Abdichtbeschichtung auch unterschiedliche Zusammensetzungen des Pulvers und damit auch der davon abhängigen Materialeigenschaften aufweisen. Auch besteht die Möglichkeit, auf diese Weise verschiedenartige Schichten aufzubauen, die jeweils unterschiedliche Eigenschaften haben. So besteht die Möglichkeit, eine untere Schicht vorzusehen, die eine besonders gute Haftung am Stahlblech ermöglicht. Die darauffolgende Schicht weist eher elastische Eigenschaften auf, während die sich daran anschließende Schicht beispielsweise eine besondere Standfestigkeit gegenüber Hitze, aggressiven Abgasen bzw. Kraftstoff hat.

Vorzugsweise wird das Verfahren so ausgeführt, daß eine erste und eine zweite Seite des Stahlbandes mit Primer oder einem Haftgrund behandelt und danach beschichtet werden. Dadurch ist es beispielsweise möglich, daß die spätere Zylinderkopfdichtung zu unterschiedlichen Seiten gleiche oder verschiedene Eigenschaften aufweist.

Eine Weiterbildung des Verfahrens sieht vor, daß nach dem Aufbringen der ersten Abdichtbeschichtung eine zweite Abdichtbeschichtung zumindest teilweise auf der ersten Abdichtbeschichtung aufgebracht wird, wobei vorzugsweise die zweite Abdichtbeschichtung aufgebracht wird, bevor der Durchlaufofen durchfahren wird. Dieses ermöglicht den Aufbau verschiedenartiger Schichten, die untereinander eine Verbindungszone durch die Art des Auftragens des Pulvers aufweisen. Zum anderen erlaubt dies auch, daß an unterschiedlichen Stationen des Beschichtungsprozesses unterschiedliche Pulver aufgetragen werden. Diese Pulver können aus unterschiedlichem Material sein oder beispielsweise eine unterschiedliche mittlere Korngröße aufweisen. Dadurch, daß die Pulverschichten gemeinsam durch den Durchlaufofen verfahren werden, ergibt sich eine besonders homogen ausgebildete Verbindungszone in demjenigen Bereich, der gekennzeichnet ist durch das Aufeinandertreffen verschiedener Pulverschichten.

Vorzugsweise wird bei dem Verfahren als erste Abdichtbeschichtung eine Pulverschicht mit einem anderen mittleren Korndurchmesser verwendet gegenüber einer nachfolgenden Pulverschicht zur Bildung der zweiten Abdichtbeschichtung. Dadurch gelingt eine besonders gute Verbindung der so erzeugten Gesamtschicht bei anschließender Erhitzung im Durchlaufofen. Beispielsweise wird zuerst eine Schicht auf den Primer oder Haftgrund aufgetragen, die einen größeren mittleren Korndurchmesser aufweist als eine nachfolgende zweite Beschichtung. Durch die Dicke der Primerschicht ist einstellbar, inwieweit die zuerst aufgetragene Pulverschicht aufgrund von Adhäsionseffekten mit dem Primer benetzt wird. Daher ist es vorteilhaft, wenn die zweite Abdichtschicht direkt auf die erste Abdichtschicht ohne zusätzlichen Primer oder Haftgrund aufgetragen wird. Der zuerst aufgetragene Primer bildet dann eine Verbindungsbrücke zwischen den beiden Pulverschichten, ohne aber wiederum in einer derartigen Masse vorzuliegen, als daß er bei den späteren Verarbeitungsschritten eine Fehlerquelle bilden könnte.

Die Erfindung stellt ebenfalls eine Vorrichtung zur Herstellung eines Zylinderkopfdichtungsvorproduktes zur Verfügung. Die Vorrichtung hat eine Station zur Beaufschlagung des Stahlbandes mit Pulver zur Herstellung einer Abdichtschicht, wie sie oben beschrieben ist..

Gemäß des Verfahrens wird somit eine Zylinderkopfdichtung aus mindestens zwei Schichten erzeugt, wobei die erste Schicht aus Stahl ist und die zweite Schicht ein Abdichtmaterial ist. Die zweite Schicht ist eine eingebrannte bzw. vemetzte Pulverabdichtschicht.

Weitere vorteilhafte Merkmale und Weiterbildungen sind in der nachfolgenden Zeichnung näher erläutert. Dabei zeigen:
Fig. 1 ein fortbewegtes Stahlband, welches durch eine Verarbeitungseinrichtung durchgeführt wird und
Fig. 2 eine Anordnung möglicher Bearbeitungsstationen zur Herstellung eines Zylinderkopfdichtungsvorproduktes.

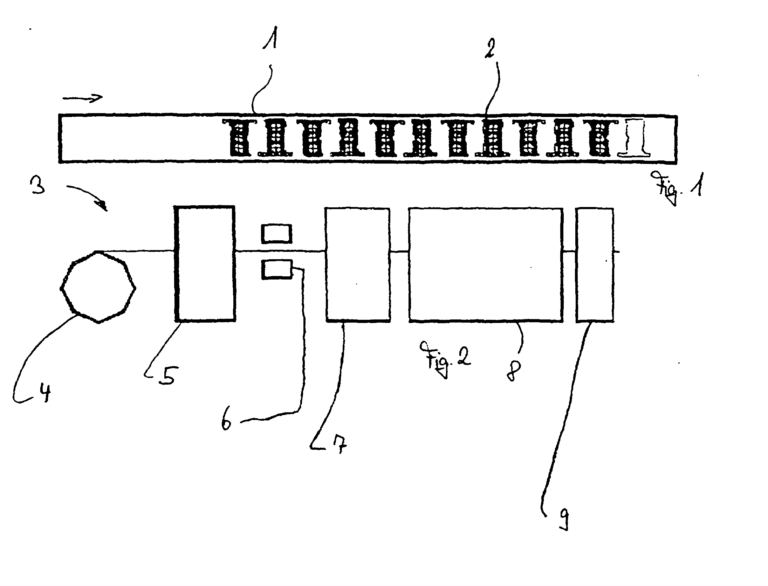

Figur 1 zeigt ein zu behandelndes Stahlband 1, das durch eine Verarbeitungseinrichtung durchgeführt wird. Das Stahlband wird dabei so behandelt, daß zur besseren Materialausnutzung die späteren Zylinderkopfdichtungsvorprodukte 2 jeweils entgegengesetzt von der Lage der Kontur her eingestanzt, anschließend mit einer Pulverschicht beschichtet und dann erhitzt werden. Die Fig. 1 ist desweiteren oberhalb der Fig. 2 so angeordnet, daß die Bearbeitungschritte entlang einer entsprechenden Verarbeitungseinrichtung zu erkennen sind.

Figur 2 zeigt den Aufbau einer Vorrichtung 3 zur Herstellung der Zylinderkopfdichtungsvorprodukte 2. Von einer Spule 4 wird das Stahlband 1 abgerollt und einer ersten Presse 5 zugeführt. In der ersten Presse 5 wird das Stahlband 1 entsprechend einer nachfolgend auszustanzenden Kontur des Zylinderkopfdichtungsvorproduktes 2 vorgeschnitten. Anschließend erfolgt in der nächstfolgenden Beschichtungsstation 6 eine Beschichtung mit einem Primer oder einem Haftuntergrund. An die Beschichtungsstation 6 schließt sich eine Pulverbeschichtungsstation 7 an, wobei in dieser das Pulver auf den Primer aufgetragen wird. Das Auftragen des Pulvers erfolgt beispielsweise durch Berieselung oder durch entsprechendes Auftragen mittels geeigneter Aufblasung. Anschließend wird das Stahlband 1 durch einen Durchlaufofen 8 geführt, wobei das Pulver und das Stahlband 1 so erhitzt werden, daß beide eine dauerhafte Verbindung miteinander eingehen. Im übrigen besteht auch die Möglichkeit, daß im Durchlaufofen 8 eine gewisse Verweilzeit eingehalten wird, damit eine dauerhafte Verbindung des Pulvers mit dem Stahlband 1 erzielt wird. Dazu kann der Durchlaufofen 8 auch eine Eingangs- und eine Ausgangsschleuse aufweisen, die das Stahlband 1 in den Durchlaufofen 8 ein- und wieder herauslassen. Hinter dem Durchlaufofen 8 folgt eine zweite Presse 9, mittels der die mit einer Abdichtbeschichtung versehenen Zylinderkopfdichtungsvorprodukte 2 aus dem Stahlband 1 gelöst werden. Die so aufgebauten Zylinderkopfdichtungsvorprodukte 2 können anschließend weiter zu Zylinderkopfdichtungen verarbeitet werden.

### Bezugszeichenliste

- 1: Stahlband
- 2: Zylinderkopfdichtungsvorprodukt
- 3: Vorrichtung zur Herstellung eines Zylinderkopfdichtungsvorproduktes
- 4: Spule
- 5: erste Presse
- 6: Beschichtungsstation
- 7: Pulverbeschichtungsstation
- 8: Durchlaufofen
- 9: zweite Presse

## Patentansprüche

1. Verfahren zur kontinuierlichen Beschichtung von Zylinderkopfdichtungsvorprodukten (2), wobei ein Stahlband (1) eine Abdichtbeschichtung erhält, und anschließend aus einem Teil des derartig beschichteten Stahlbands (1) Zylinderkopfdichtungsvorprodukte (2) werden, umfassend die Schritte:
- Aufbringen eines Primers oder Haftgrunds auf das Stahlband (1);
- Aufbringen eines pulverförmigen Materials;
- Durchleiten des Stahlbands (1) durch einen Durchlaufofen (8), so dass das pulverförmige Material eine feste Abdichtbeschichtung auf und mit dem Stahlband (1) bildet;
- Herauslösen des Zylinderkopfdichtungsvorprodukts (2) aus dem Stahlband (1);
**gekennzeichnet dadurch,**
**dass** vor dem Aufbringen des Primers oder Haftgrunds eine Vorprägung des Stahlbands (1) durchgeführt wird, und dass der Primer oder Haftgrund und das pulverförmige Material in dem vorgeprägten Bereich des Stahlbands (1) aufgebracht werden.

2. Verfahren nach Anspruch 1, wobei eine erste und eine zweite Seite des Stahlbands (1) beschichtet werden.

3. Verfahren nach Anspruch 2 oder 3, wobei nach dem Aufbringen der ersten Abdichtbeschichtung eine zweite Abdichtbeschichtung zumindest teilweise auf der ersten Abdichtbeschichtung aufgebracht wird, ohne Verwendung von zusätzlichem Primer oder Haftgrund.

4. Verfahren nach Anspruch 3, wobei die zweite Abdichtbeschichtung aufgebracht wird, bevor der Durchlaufofen (8) durchfahren wird.

5. Verfahren nach Anspruch 3 oder 4, wobei das pulverförmige Material der zweiten Abdichtbeschichtung einen anderen mittleren Korndurchmesser aufweist als das pulverförmige Material der ersten Abdichtbeschichtung.

6. Verfahren nach einem der vorhergehenden Ansprüche, wobei zumindest das pulverförmige Material einer Vibration zur Verteilung des Materials ausgesetzt wird.

7. Verfahren nach einem der vorhergehenden Ansprüche, wobei ein pulverförmiges Material verwendet wird, das eine Mischung aus mehreren Materialien ist, wobei der Anteil der Bestandteile der Mischung von dem Bereich des Stahlbands (1) abhängig ist, auf den das pulverförmige Material jeweils aufgebracht wird.

8. Verfahren nach einem der vorhergehenden Ansprüche, wobei ein erstes verwendetes pulverförmiges Material eine spezielle erste Eigenschaft der Abdichtbeschichtung bewirkt, und ein zweites verwendetes pulverförmiges Material eine spezielle zweite Eigenschaft der Abdichtbeschichtung bewirkt, wobei sich die speziellen Eigenschaften voneinander unterscheiden.

9. Vorrichtung (3) zur Herstellung eines Zylinderkopfdichtungsvorprodukts (2), wobei die Vorrichtung (3) eine Beschichtungsstation (6) zum Aufbringen eines Primers oder Haftgrunds auf ein Stahlband (1); eine Pulverbeschichtungsstation (7) zur Beaufschlagung des Stahlbands (1) mit pulverförmigem Material, einen Durchlaufofen (8) zum Erhitzen des Stahlbands (1), und eine zweite Presse (9) zum Herauslösen des Zylinderkopfdichtungsvorprodukts (2) aus dem Stahlband (1) aufweist,
**dadurch gekennzeichnet,**
**dass** die Vorrichtung (3) ein Mittel zur Vorprägung eines Stahlbands (1) aufweist, dass die Beschichtungsstation (6) angepasst ist, um den Primer oder Haftgrund in dem vorgeprägten Bereich aufzubringen, und dass die Pulverbeschichtungsstation (7) angepasst ist, um das pulverförmige Material in dem vorgeprägten Bereich aufzubringen.

## Claims

1. Method for the continuous coating of cylinder head gasket pre-forms (2), whereby a steel strip (1) receives a sealing coat, and afterwards cylinder head gasket pre-forms (2) are made from some of the steel strip (1) coated in this way, comprising the stages:
- Application of a primer or adhesion promoter onto the steel strip (1);
- Application of a powder material;
- Passage of the steel strip (1) though a continuous oven (8), so that the powder material forms a permanent sealing coat on and with the steel strip (1);
- Parting of the cylinder head gasket pre-form (2) from the steel strip (1);
**characterised in that** before application of the primer or adhesion promoter a prestamping of the steel strip (1) is carried out and that the primer or adhesion promoter and the powder material are applied within the pre-stamped area of the steel strip (1).

2. Method according to Claim 1, whereby a first and a second side of the steel strip (1) are coated.

3. Method according to Claim 2 or 3, whereby after application of the first sealing coat a second sealing coat is applied at least partially over the first scaling coat, without additional use of primer or adhesion promoter.

4. Method according to Claim 3, whereby the second sealing coat is applied before passage though the continuous oven (8).

5. Method according to Claim 3 or 4, whereby the powder material of the second sealing coat has a mean particle size different from the powder material of the first sealing coat.

6. Method according to any one of the preceding claims, whereby at least the powder material is exposed to vibration for distribution of the material.

7. Method according to any one of the preceding claims, whereby a powder material is used, which is a blend of several materials, the proportion of the components of the blend depending on the area of the steel strip (1), over which the powder material is applied in each case.

8. Method according to any one of the preceding claims, whereby a first applied powder material produces a particular first property of the sealing coat, and a second applied powder material produces a particular second property of the sealing coat, whereby the particular properties differ from one another.

9. Plant (3) for the production of a cylinder head gasket pre-form (2), whereby the plant (3) has a coating station (6) for applying a primer or an adhesion promoter onto a steel strip (1); a powder coating station (7) for coating the steel strip (1) with powder material, a continuous oven (8) for stoving the steel strip (1), and a second press (9) for parting the cylinder head gasket pre-form (2) from the steel strip (1), **characterised in that** the plant (3) has means to pre-stamp a steel strip (1), that the coating station (6) is adapted to apply the primer or adhesion promoter in the pre-stamped area, and that the powder coating, station (7) is adapted to apply the powder material in the pre-stamped area.

## Revendications

1. Procédé pour le revêtement en continu d'ébauches de joints de culasses (2), dans lequel un feuillard d'acier (1) reçoit un revêtement d'étanchement et, ensuite, des ébauches de joints de culasses (2) sont fabriqués à partir d'une partie du feuillard d'acier (1) ainsi revêtu, comprenant les étapes suivantes :
- application d'une couche de fond ou couche d'accrochage sur le feuillard d'acier (1) ;
- application d'une matière pulvérulente ;
- passage du feuillard d'acier (1) à travers un four continu (8) afin que la matière pulvérulente forme un revêtement d'étanchement solide sur et avec le feuillard d'acier (1) ;
- enlèvement de l'ébauche de joint de culasse (2) du feuillard d'acier (1) ;
**caractérisé en ce que**, avant l'application de la couche de fond ou couche d'accrochage, un estampage préalable du feuillard d'acier (1) est réalisé et **en ce que** la couche de fond ou couche d'accrochage et la matière pulvérulente sont appliquées dans la zone préalablement estampée du feuillard d'acier (1).

2. Procédé selon la revendication 1, dans lequel un premier et un second côté du feuillard d'acier (1) sont revêtus.

3. Procédé selon la revendication 2 ou 3, dans lequel, après l'application du premier revêtement d'étanchement, un second revêtement d'étanchement est appliqué au moins partiellement sur le premier revêtement d'étanchement sans utiliser une couche de fond ou couche d'accrochage supplémentaire.

4. Procédé selon la revendication 3, dans lequel, le second revêtement d'étanchement est appliqué avant le passage à travers le four continu.

5. Procédé selon la revendication 3 ou 4, dans lequel la matière pulvérulente du second revêtement d'étanchement présente un diamètre de grain moyen différent de celui de la matière pulvérulente du premier revêtement.

6. Procédé selon l'une quelconque des revendications précédentes, dans lequel au moins la matière pulvérulente est soumise à une vibration pour répartir la matière.

7. Procédé selon l'une quelconque des revendications précédentes, dans lequel on utilise une matière pulvérulente qui est un mélange de plusieurs matières, la proportion des constituants du mélange dépendant de la zone du feuillard d'acier (1) sur laquelle est respectivement appliquée la matière pulvérulente.

8. Procédé selon l'une quelconque des revendications précédentes, dans lequel une première matière pulvérulente utilisée crée une première propriété spéciale du revêtement d'étanchement et une seconde matière pulvérulente utilisée crée une seconde propriété spéciale du revêtement d'étanchement, les propriétés spéciales se différenciant l'une de l'autre.

9. Dispositif (3) pour la fabrication d'une ébauche de joint de culasse (2), le dispositif (3) comprenant un poste de revêtement (6) pour l'application d'une couche de fond ou couche d'accrochage sur un feuillard d'acier (1) ; un poste de revêtement de poudre (7) pour l'alimentation du feuillard d'acier (1) en matière pulvérulente, un four continu (8) pour le réchauffage du feuillard d'acier (1), et une seconde presse (9) pour l'enlèvement de l'ébauche de joint de culasse (2) hors du feuillard d'acier (1),
**caractérisé en ce que** le dispositif comprend un moyen pour l'estampage préalable d'un feuillard d'acier (1), **en ce que** le poste de revêtement (6) est adapté pour appliquer la couche de fond ou couche d'accrochage dans la zone préalablement estampée et **en ce que** le poste de revêtement de poudre (7) est adapté pour appliquer la matière pulvérulente dans la zone préalablement estampée.
